# EUROPEAN PATENT SPECIFICATION

(11) **EP 3 606 117 B1**
(45) Date of publication and mention of the grant of the patent: **06.10.2021**
(21) Application number: 18000643.9
(22) Date of filing: 02.08.2018
(51) Int. Cl.: H04W 8/18, H04W 8/20, H04W 12/06, H04W 12/30

(54) **METHOD FOR MANAGING SUBSCRIPTION PROFILES, SUBSCRIPTION MANAGING SERVER AND UICC**
VERFAHREN ZUR VERWALTUNG VON ABONNEMENTPROFILEN, ABONNEMENTVERWALTUNGSSERVER UND UICC
PROCÉDÉ DE GESTION DE PROFILS D'ABONNEMENT, SERVEUR DE GESTION D'ABONNEMENT ET UICC

(43) Date of publication of application: 05.02.2020
(73) Proprietor: Giesecke+Devrient Mobile Security GmbH, 81677 München (DE)
(72) Inventor: Parihar, Mohit Singh, 486001 Madhya Pradesh (IN)

(56) References cited:
- EP-A1- 3 267 699
- WO-A1-2017/220155
- US-A1- 2013 344 864
- US-A1- 2017 149 827

## Description

### TECHNICAL FIELD OF THE INVENTION

The invention relates to a method for managing subscription profiles in a Universal Integrated Chip Card (UICC), preferably an embedded UICC. The invention also relates to a method for managing subscription profiles in subscription managing server. The invention also relates to a subscription managing server and a UICC and a computer-program-product. The term UICC will be used synonymic to the term eUICC hereinafter.

### TECHNICAL BACKGROUND OF THE INVENTION

An approach of the Global System for Mobile Communications Association (GSMA) is focused on a remote provisioning and managing of subscription profiles for mobile network authentication for Universal Integrated Chip Card (UICC), preferably an embedded UICC as for instance outlined in GSMA Technical Specification "Remote Provisioning Architecture for eUICC", version 3.2, published on June 27, 2017. Therefore, the GSMA defined a minimum setup of technical solutions for such a remote provisioning and managing of eUICC's in terminal devices, such as machine-to-machine device (M2M), which are not easily physically accessible or not easily replaceable. This technical solution provides the basis for ensuring global interoperability between potentially different mobile network operator's (MNO) deployment scenarios, different network equipment and different eUICC platforms.

An eUICC architecture widely leverages current telecommunication standards, as well as Global Platform standards that are especially well adapted to establish role separation and data isolation. To ensure a high level of security, e.g. against frauds or attacks and to ensure that a subscriber is properly identified at an MNO, the eUICC architecture comprises a set of security domains for platform and profile management, such as a root issuer security domain, ISD-R, and at least one profile issuer security domain, ISD-P.

An ISD-P remains associated to the ISD-R, during all its life time in order for the ISD-R to be able to perform management functions, such profile creation, deletion, enabling, disabling and/or fallback attribute settings as well as transport functions. This performance is called profile life-cycle.

WO 2017/220155 A1 discloses a method of ending a subscription performed in a network entity. The method comprises receiving, from a device comprising an Embedded Universal Integrated Circuit Card, eUICC, a signed confirmation of a profile having been deleted in the device, the profile being associated with a subscription for the device; sending, to a Subscription Manager Data Preparation entity, a command for deletion of the profile; and deleting the user subscription and related profile in case an acknowledgement of the deletion of the profile is received from the Subscription Manager Data Preparation entity. The ISD-R deletes the profile and uses an EID certificate to sign the delete confirmation and the profile ID, e.g. ICCID, of the deleted profile and the IMSI.

It has been defined that only one ISD-P is enabled on an eUICC at any point in time. According to current policy rules, no profile component of a profile is visible or accessible for components outside its own ISD-P. So, no ISD-P is visible or accessible to any other ISD-P in the eUICC.

However, disabled profiles, still included in an eUICC may require valuable memory space that may be needed in the eUICC for other purposes, such as an over-the-air (OTA), updates of the enabled profile or another set of profile applications/files, or even for applications required outside the ISD-R, such as sensor data, measuring reports or other typical M2M data.

So, instead of disabling a specific profile and re-enabling it later, it may be necessary to delete the disabled profile to gain available memory space in the eUICC for other purposes.

However, the GSMA defined deletion procedure for profiles requires the removal of the ISD-P and its entire profile. A drawback of such a deletion is that all updates of a profile during an enabled-state of that profile are lost. In case, the profile should be re-established (created and enabled again), all the update information is missing and may have to be loaded to the eUICC again after enablement of the profile, piece-by-piece, which increases network traffic, and which also increases the duration for re-establishing the profile to have a fully functional enabled profile.

So, there is a need for securing components of a subscription profile during a deletion procedure. This securing should not violate the technical specification for managing profiles and should help for a faster re-establishing of a previously deleted profile to have the latest version prior its deletion included in the eUICC.

Another need is present when a profile has been enabled for a long term, e.g. several months or years. During such a long term, a plurality of profile updates may be executed. Since the updates can be established by the MNO or the subscription managing server, there may be an inconsistency regarding the actual version of the profile included in the eUICC. In such a case, the MNO or the subscription may require collecting the actual version of the profile.

### SUMMARY OF THE INVENTION

The above identified objects are solved by the features of the independent claims. Further advantageous embodiments are derived from the respective dependent claims.

According to an aspect, there is provided a method for managing subscription profiles in a Universal Integrated Chip Card, preferably an embedded UICC, the method comprising the steps of: Receiving a profile-disabling command from a server for disabling an enabled subscription profile in the UICC, wherein the subscription profile comprises a static component and a non-static component; Disabling the subscription profile by the UICC; and Sending a profile-disabling command response to the server, wherein this response includes the non-static component of the disabled subscription profile.

So, a profile has a static component and a non-static component. The static component is referred to profile data available during an initial downloading and creating-procedure of that profile. This static component is specified by and under the full control of the MNO. The static component may contain at least one of the following: an MNO security domain, MNO-SD having the MNO's over-the-air, OTA, cryptographic key sets; at least one network access application, NAA, a policy rule data set, POL, a file system; at least one connectivity parameter of the profile, applications, e.g. as defined in Global Platform Card Specification in addition to the MNO-SD; and/or one controlling authority SD, CASD, e.g. as defined in Global Platform Card Specification UICC Configuration.

However, during an enabled-state of the profile each element of the static-component can be updated, extended, enhanced or amended. Further elements can be added to the static-component. Each change of the static-component is now referenced as non-static component.

The server may be a subscription managing server, such as subscription managing secure routing server, SM-SR. So, a secure channel can be established between the SM-SR and the ISD-R. The eUICC may support SCP80 and SCP81 as defined in ETSI 102 225 and/or ETSI 102 226.

The server may be an MNO server. So, a secure channel can be established between an MNO OTA Platform and the ISD-R and/or the ISD-P as specified in ETSI TS 102 225 and/or ETSI TS 102 226.

The profile-disabling command may be provided as a disable-profile function from an MNO and/or may be provided via a short message service, SMS, including a store-data function from a subscription managing server to the eUICC during a profile-disabling procedure as defined in GSMA.

So, the commands and its responses are based on the use of SMS, provided from a SMS Center, SMSC. So, a widely-used and highly standardized solution is presented that is easily implemented in existing environments and that allows UICC based secure authentication to subscription managing services. The UICC may support a plurality of concatenated SMS for communication with the server.

The profile-disabling step in the eUICC may be regarded as a disabling of the targeted ISD-P as defined in GSMA. So, there may be an enabling of a fallback attribute set to ensure that the eUICC is still reachable and configurable.

The sending of a profile-disabling command response to the server from the eUICC may be in return to the SMS from the server and may also be an SMS.

In contrast to SMS, also HTTPS-Sessions or TCP-Sessions may be used for communication between server and eUICC.

After sending of a profile-disabling command response, a proactive command "REFRESH" may be sent from the eUICC to a terminal device having the eUICC. This causes a RESET of the eUICC and so, the fallback attribute set may be used to achieve network accessibility.

So, the disabling-profile-procedure is used to obtain the actual version of the profile at the server side by receiving the non-static component of the profile to be disabled. So, the profile state prior the disabling is frozen and can be secured at the server side.

In a preferred embodiment, after the step of sending the profile-disabling command response to the server, the method further comprises receiving of a profile-deleting command from the server; and deleting the disabled subscription profile with deletion of the static component and the non-static component of the disabled subscription profile.

The profile-deleting command received at the eUICC will be interpreted as an acknowledgement of the profile-disabling command response including the non-static component of the profile to be disabled at the server. So, the server obtained the non-static component and indicates it with the profile-deletion command.

So, a deletion of that disabled profile can be performed by the eUICC with removal of the static and the non-static profile component and every element contained therein, since they are safely transferred to the server.

Alternatively, the deletion of the non-static component is done automatically after successful transferring the non-static component of the profile to the server. Therefore, the policy rule data set of that profile has to have such an auto-deletion rule.

The non-static component of the subscription profile may comprise elements, e.g. at least one of the following: at least one subscription profile application update; at least one subscription profile file update; at least one network access application update; at least one over-the-air update; and/or at least one secure domain data update.

Since each of these elements of the non-static component may be updated separately and during different time points during the enabled-state of the profile, all the elements in non-static component of the profile can differ from the initially downloaded profile. Advantageously, these differing elements are now collected and provided to the server during a profile-disabling-procedure. So, it will be possible to restore this non-static component of the profile at once and avoiding a piece-by-piece updating of the profile after re-enabling the profile.

In a preferred embodiment, before the step of sending the profile-disabling command response to the server, the method may further comprise the steps of: Structuring the non-static component of the disabled subscription profile in an Abstract Syntax Notation One, ANS.1, language by encoding the non-static component in a Distinguished Encoding Rules, DER, format; and including the DER formatted non-static component in a data field of a short message service, SMS. Preferably, the encoded data is wrapped with an MNO key and an MNO algorithm.

ASN.1 is an interface description language for defining data structures that can be serialized and deserialized in a standard, cross-platform way and so allows a platform independent transmittal of the non-static component. ASN.1 can use a set of encoding rules that specify how to represent a data structure as a series of bytes. Advantageously, a DER-formatted encoding rule is used. DER produces unequivocal transfer syntax for data structures described by ASN.1. DER provides exactly one way to encode an ASN.1 value to enable a unique encoding and ensures that a data structure that needs to be digitally signed produces a unique serialized representation. Since DER is widely used in mobile network communication, the adaption of the non-static component to this standard enable high platform-independent interoperability, e.g. as defined in technical specification of eUICC profile package interoperable format.

Preferably, a new policy rule is defined allowing upload and transfer of non-static and/or static components of a subscription profile.

The non-static component of the subscription profile may be embedded in a data field of a mobile originated short message service, MO-SMS; e.g. as a command response message. This data field is not present in the technical specification and could be defined for this advantageous purpose.

In a preferred embodiment, non-static components of all subscription profiles included in the UICC are identified by an applet. This identification may be a marking of an element of the non-static component of each profile, such as setting a flag that this element of the non-static component has been updated or amended. So, non-static components of all profiles can be identified easily and are collected easily for a respective sending of these non-static components.

The applet may be executed for all subscription profiles included in the UICC. The server may disable the profile without prompt deletion. So, the profile is disabled but not deleted. Using the applet improves the collection of the non-static component since they are already identified during disabling profile procedure. If the server decides deletion of that disabled profile in a later stage, the collection of the non-static component is much easier upon obtaining the deletion-command and so, the deletion procedure is not delayed unnecessary.

Alternatively, the applet may be enabled after confirmation of a profile-download procedure completion indicated by the UICC. So, as soon as a new profile slot is created, and the static component of the profile is downloaded, the applet is enabled and may identify updates of the profile upon its receival.

Alternatively, the applet may be enabled after enabling of a subscription profile in a profile-enabling procedure indicated by the UICC. So, upon enablement of the profile, the applet is enabled and may identify updates of the profile upon its receival. This applet may be executed or enabled upon proactive command REFRESH in a profile-enabling procedure.

The identifying may be executed upon receipt of update-data for updating the subscription profiles. So, whenever such updates or amended data are received for the downloaded or enabled profile, the identifying is triggered, and the marking is processed. E.g. the update or the received data is flagged, or its receipt is noted in a table included in the eUICC.

In a preferred embodiment, the method has the further steps of: Receiving a profile-creating command from the server for creating the static component of the previously deleted subscription profile in the UICC; Creating a new subscription profile in the UICC; Receiving the static component of the previously deleted subscription profile during a profile-downloading procedure; and Receiving the non-static component of the previously deleted subscription profile in the newly created subscription profile upon download complete response from the UICC. So, although the profile was deleted entirely, it is now possible to restore the entire profile as being integrated in the eUICC prior the deletion having the static component and the non-static component and so, the profile is already updated to the version that has been disabled and deleted once.

The profile-creating command may be provided as a create-profile function from an MNO and/or may be provided via Hypertext Transfer protocol, HTTP, session, for fetching APDU strings as static component profile data from a subscription managing server to the eUICC during a profile-creating procedure as defined in GSMA.

In another aspect, a method for managing subscription profiles in subscription managing server, preferably a subscription manager secure routing server, SM-SR, comprises the steps of: Sending a profile-disabling command from the server for disabling an enabled subscription profile to an UICC, wherein the subscription profile comprises a static component and a non-static component; Receiving a profile-disabling command response from the UICC, wherein this response includes the non-static component of the disabled subscription profile; and Storing the non-static component of the disabled subscription profile at the server or transferring the non-static component of the disabled subscription profile to a mobile network operating server.

So, the non-static part of the profile to be disabled is stored in the SM-SR or at an MNO side and so, the actual version of the profile is obtained.

In a preferred embodiment, the non-static component of the subscription profile is embedded in a data field of a mobile-originated short message service, MO-SMS.

In a preferred embodiment, after the storing step or the transferring step, the method comprises the following steps of: Sending a profile-deleting command to the UICC upon successful storing the non-static component of the subscription profile; and Receiving a profile-deleting command response from the UICC.

In another aspect of the present disclosure, a subscription managing server comprises a storage for storing a plurality of non-static components of subscription profiles; an interface for communicating to an UICC via a terminal device; and an interface for communicating to a mobile network operating server, wherein the subscription managing server being configured to execute the aforementioned method steps for managing subscription profiles in subscription managing server.

Preferably, the server is logically located in the MNO system, e.g. as part of a managing secure service provider, MSSP, and in communication with a Short Messaging Service Center, SMSC. This allows that the server runs the authentication procedure as usual without any changed routine. The MNO that may include the authentication server in the MSSP applies the inventive concept for subscription managing using the SMSC as a gateway.

In another aspect of the present disclosure, an embedded Universal Integrated Chip Card, eUICC, operably incorporated in a terminal device comprises: a storage for storing subscription profiles, wherein each subscription profile comprises a static component and a non-static component; an interface for communicating to a subscription managing server, wherein the eUICC being configured to execute the aforementioned method steps for managing subscription profiles in a UICC.

In another aspect of the present disclosure, a computer-program-product is executably installed in a Universal Integrated Chip Card, UICC, and comprises means for executing the aforementioned method steps for managing subscription profiles in subscription managing server.

Preferably, the computer-program-product is at least partly a Java Card applet that is executed in the UICC being integrated in a terminal device.

Herein, the terms "UICC" and "eUICC" are understood as integrated circuits, IC, that are intended to securely store at least one subscription profile having a static and a non-static component. An enabled profile in an eUICC may have an international mobile subscriber identity number, IMSI, a unique serial number, ICCID, cryptographic encryption/decryption keys (e.g. Ksim), security authentication and ciphering information, temporary information related to the local network, a list of the services the user has access to, and maybe two passwords: a personal identification number (PIN) for ordinary use, and a personal unblocking code (PUK) for PIN unlocking, which are used to uniquely identify and authenticate a subscriber on a terminal device, such as an M2M device, a mobile phone, a personal computer and so on.

The UICC is a physical smart card, which is usually made of plastic, such as PVC with contact pads that are linked to a semiconductor embedded in the card and having SIM formats as standardized according to international specifications ISO/IEC 7810 or ETSI TS 102.221. Another format of UICC is called "eUICC", also referred to as e-SIM, which comprises the UICC in a non-replaceable embedded chip package, which may be soldered directly onto a circuit board. It will have M2M, and remote SIM provisioning capabilities.

A UICC not being JC-based (non-JC based) UICC may be referred to as native UICC or UICC with a native operating system, OS. An OS is a system software configured to manage the UICC underlying hardware and software resources and provides common services for connected entities via standardized interfaces. The execution of instructions in a UICC environment is highly standardized and interfaces and responses are well defined in technical standardizations.

The receiving-steps are preferably realized as a GSM/UMTS/LTE-standardized wireless interface, preferably an OTA communication and/or an OTA-HTTP-communication.

Preferably, the at least one interface for communicating with the server is based on the Hypertext Transfer Protocol Secure, HTTPS, protocol for self-care-administration and/or costumer-care-administration.

Preferably, the server further comprises an OTA platform system, configured to send and receive updates to the eUICC and further configured to provide secure messaging using cryptographic encryption/decryption.

### BRIEF DESCRIPTION OF THE DRAWINGS

In the following exemplary embodiments of the invention are described with reference to drawings. Those exemplary embodiments do not limit the scope of the invention. The same reference signs in different drawings indicate the same elements or at least the same functions unless otherwise stated.
Fig.1 shows an exemplary embodiment of a subscription managing system as defined in GSMA technical specification 2 of version 3.2;
Fig.2 shows an exemplary embodiment of a subscription profile according to the invention;
Fig.3 shows an exemplary embodiment of a process flow of a method for managing a subscription profile in a eUICC according to the invention;
Fig.4 shows an exemplary embodiment of a process flow of a method for managing a subscription profile in a subscription managing server according to the invention;
Fig.5 shows an exemplary embodiment of a process flow for disabling and deleting a subscription profile according to the invention in a subscription managing system according to Fig.1; and
Fig.6 shows an exemplary embodiment of a process flow for re-establishing a previously deleted subscription profile according to the invention in a subscription managing system according to Fig.1.

### DETAILED DESCRIPTION OF THE PREFERRED EMBODIMENTS

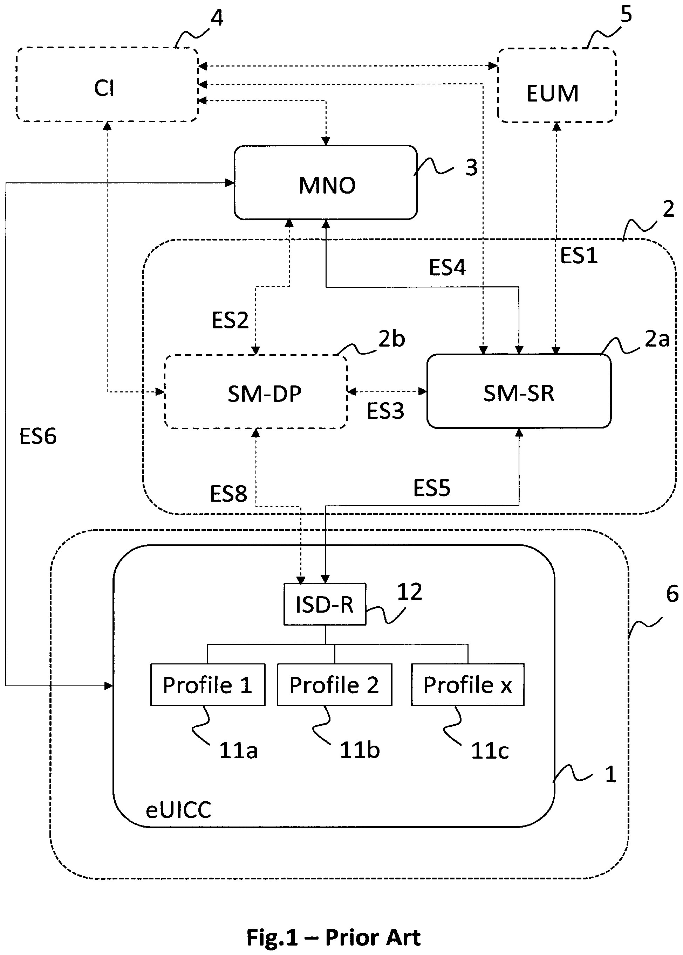

Fig.1 shows an exemplary embodiment of a subscription managing system as defined in GSMA technical specification 2 of version 3.2, section 2. The system components shown in dashed-lines are not required for the inventive solution and are presented merely for completeness reasons. In Fig.1, the roles and interfaces associated with the remote provisioning and management of the eUICC, building on GSMA standard has at least one eUICC.

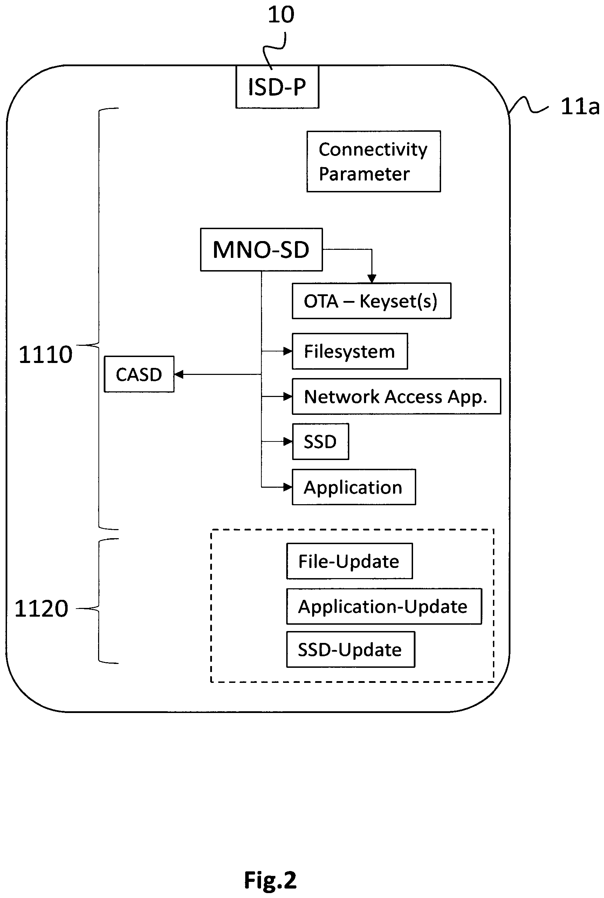

Each eUICC 1 of the system in Fig.1 has a dedicated security domain, SD, with different privileges and configuration for platform and profile management, such as ISD-R 12 as the representative of an off-card entity of a subscription managing secure routing server, SM-SR 2a. An eUICC controlled authority security domain, ECASD, may be included as well (not shown in Fig.1) that is a representative of the off-card entity of a certificate identifier, CI, 4. An ISD-P is the representative of an off-card entity of a subscription managing data preparation, server, SM-DP 2b. In Fig.1, three profiles 11a, 11b, 11c are shown that are managed and secured by three ISD-Ps 10 (see Fig.2). The number of profiles 11a, 11b, 11c included the eUICC 1 is not limited and can be more than three or even less.

In Fig.1, the SM-SR 2a and the SM-DP 2b are shown as separate entities but can functionally be considered as one server 2, as indicated by dotted-line.

There is only one ISD-R 12 on an eUICC 1. The ISD-R 12 may be installed and first personalized by an eUICC manufacturer 5, EUM, during eUICC 1 manufacturing. After eUICC 1 manufacturing, the ISD-R 12 is in life-cycle state PERSONALIZED. The ISD-R 12 is only able to perform platform management functions on ISD-Ps 10.

An ISD-P has a unique profile 11a, 11b, 11c. Only one ISD-P is enabled on an eUICC 1 at any point in time. An ISD-P is installed by the ISD-R 12 and then personalized by its related SM-DP 2a. At least one ISD-P 10 with a profile 11a, 11b, 11c may be installed and first personalized by the EUM 5 during eUICC 1 manufacturing to allow future eUICC connectivity.

No component outside the ISD-P 10 has visibility or access to any profile component of the profile 11a, 11b, 11c apart from the ISD-R 12, which has read access to policy rules and to the connectivity parameters of each profile 11a, 11b, 11c. No profile component is visible of, or accessible by components outside its ISD-P. An ISD-P 10 shall not have any visibility of, or access to, any other ISD-P 10.

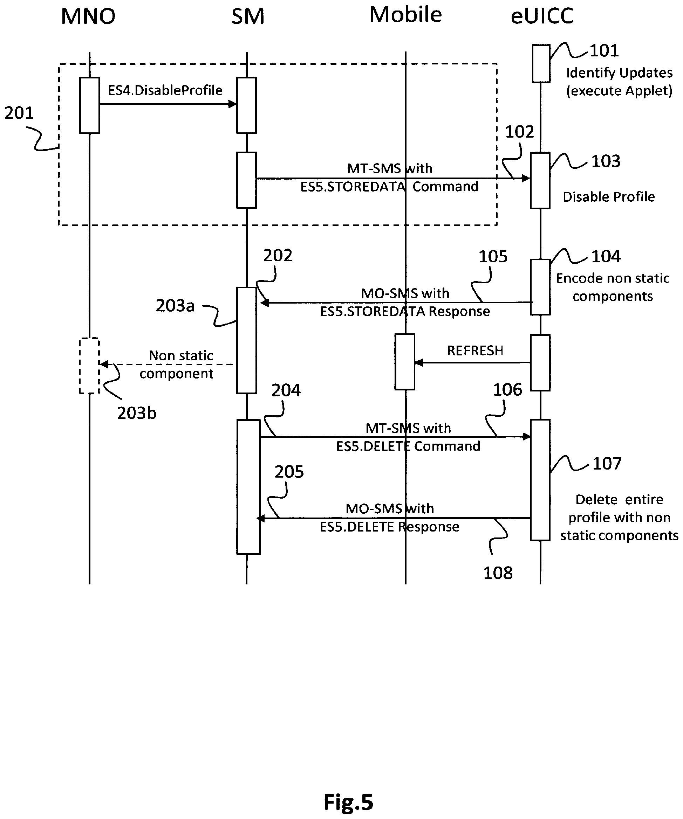

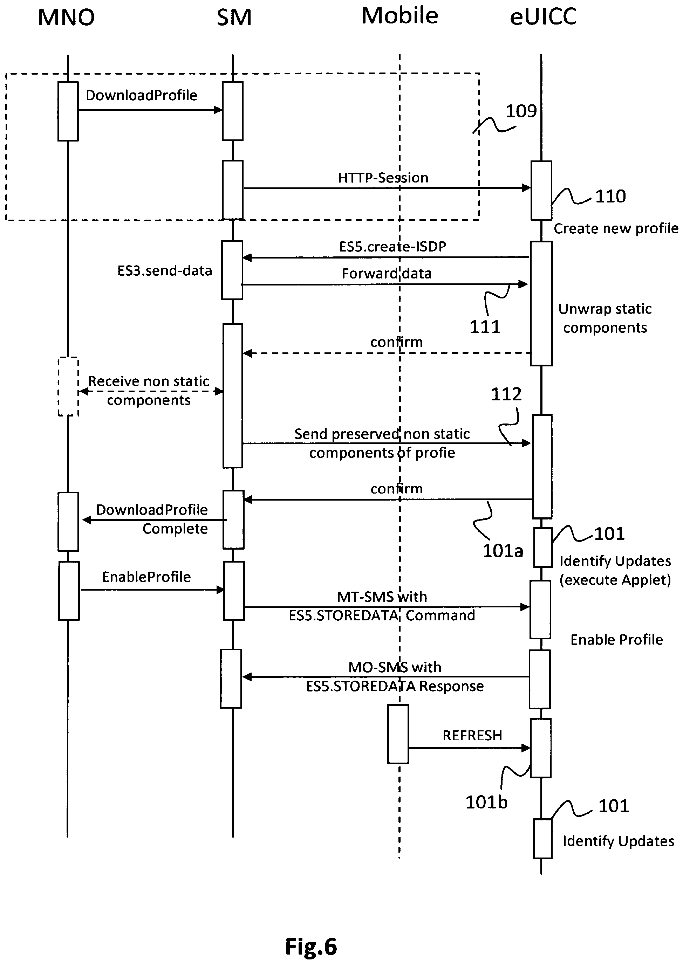

An ISD-P 10 remain associated to the ISD-R 12 during all its life time for the ISD-R 12 to be able to perform following Platform Management functions: Profile Creation - the association between the ISD-R 12 and an ISD-P creatable any time; Profile Deletion; Profile Enabling; Profile Disabling; Fallback Attribute setting; and profile transport function - the association allowing SCP03/SCP03t establishment between the SM-DP 2b and the ISD-P 10. The structure of the profiles 11a, 11b, 11c will be described in Fig.2. Parts of the profile-procedures are described in Fig.5 and Fig.6.

A plurality of interface ESx are defined in the system of Fig.1:
The interface ES8 addresses functions to the eUICC 1 through a secure channel established between the SM-DP 2b and the ISD-P 10. The eUICC 1 supports SCP03/SCP03t for ES8. To enable SCP03/SCP03t, the ISD-P 10 is personalized with at least one key set. The ES8 interface is between the SM-DP and its ISD-P 10 and goes through the SM-SR 2a. The ES8 is realized by a SCP03 or SCP03t secure channel that may be tunneled through a secure channel between the SM-DP 2b and the SM-SR 2a established in the ES3 interface and on through into the SCP80 or SCP81 secure channel between the SM-SR 2a and the ISD-R 12. It is then provided by the ISD-R 12 to the ISD-P 10.

The interface ES6 addresses functions to the eUICC 1 through a secure channel established between the MNO 3 and an MNO-security domain, included in each ISD-P 10. The eUICC 1 supports SCP80 and SCP81 as defined in ETSI 102 225 and ETSI 102 226 for this E6 interface. The initial OTA Key sets are part of each profile 11a, 11b, 11c and are loaded by the SM-DP 2b during a profile download and installation procedure or are loaded by the EUM 5 before eUICC 1 is issued.

The interface ES5 addresses functions to the eUICC 1 through a secure channel established between the SM-SR 2a and the ISD-R 12. The eUICC 1 supports SCP80 and SCP81 as defined in ETSI 102 225 and ETSI 102 226 for this E5 interface. To enable SCP80/SCP81, the ISD-R 12 is personalized before issuance by the EUM 5 with respective key sets. The key sets are loaded in the ISD-R 12 via the SM-SR 2a; e.g. using ES1.

In the system of Fig.1, the OTA communication is exclusively handled by the SM-SR 2a. The SM-SR 2a uses SMS, CAT_TP and HTTPS for remote OTA communication with the eUICC 1. In HTTPS case, the SM-SR 2a and eUICC 1 support DNS resolution to resolve the IP address of the SM-SR 2a. For LTE network deployments the system of Fig. 1 supports SMS. The SM-SR 2a is free to select the most relevant protocol according to the eUICC 1 and the capabilities of the terminal device 6 and the platform or Profile Management operation to execute.

The eUICC 1 supports sending of secure packet over SMS as defined in 3GPP TS 31.115. SMS, either mobile terminated, MT, or mobile originated, MO, may use a CC with a length of 64 bits using AES CMAC mode, ciphering using AES in CBC mode and counter value higher.

Fig.2 shows an exemplary embodiment of a subscription profile according to the invention. A profile 11a is controlled by ISD-P 10 as explained above. The profile 11a has a static component 1110 and a non-static component 1120. The static component 1110 is the profile data available during a downloading and creating-procedure. This static component 1110 is specified by and under the full control of the MNO 3. The static component 1110 may contain at least one of the following: an MNO security domain, MNO-SD having the MNO's OTA Key sets; at least one network access application, NAA, policy rules, POL, a file system; connectivity parameters of the profile, applications (e.g. as defined in Global Platform Card Specification in addition to the MNO-SD); and/or one Controlling Authority SD, CASD, e.g. as defined in Global Platform Card Specification UICC Configuration.

During an enabled-state of the profile 11a the static-component 1110 can be updated or amended and extended (e.g. by additional applications). Each updated element of the static component 1110 of the profile 11a is hereinafter referred to as non-static component 1120.

The non-static component 1120 of the subscription profile 11a comprise at least one of the following: at least one subscription profile application update; at least one subscription profile file update; at least one network access application update; at least one over-the-air update; and/or at least one secure domain data update as shown in Fig.2.

Since each element in the non-static component 1120 is updated separately and during different time points during the enabling-state of the profile 11a, all the elements of the non-static component 1120 are now advantageously collected and provided to the server 2 during a profile-disabling-procedure. So, it will be possible to restore this non-static component 1120 at once after a deletion and a piece-by-piece updating of the profile 11a after re-enabling the profile 11a is avoided.

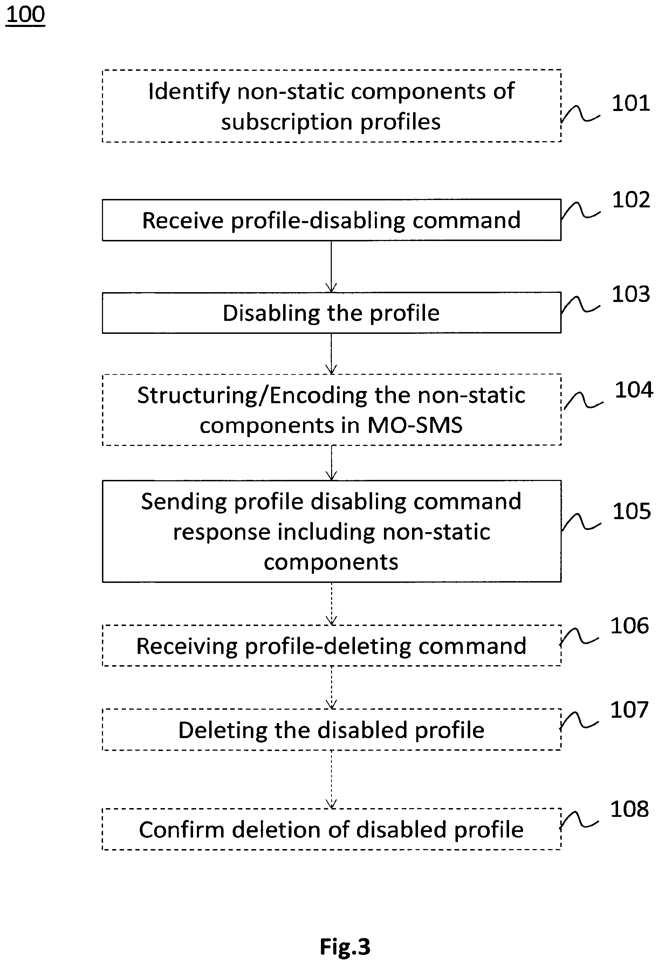

Fig.3 shows an exemplary embodiment of a process flow of a method 100 for managing a subscription profile in a eUICC 1 according to the invention. Process steps that are optional are drawn in dashed lines.

The method 100 for managing subscription profiles 11a, 11b, 11c in a e UICC 1 comprises the steps of.

In optional step 101, the non-static component 1120 of a profile 11a, 11b, 11c is identified. This is done by a JC applet executed in the eUICC 1 for observing any amendment in the profile 11a, 11b, 11c. The identification 101 can be achieved by setting a flag or by noting the amendments in a table.

In a receiving step 102, a profile-disabling command is received from a server 2 for disabling an enabled subscription profile 11a, 11b, 11c in the UICC 1. The receiving step is made via interface ES4 and/or ES5. The subscription profile 11a, 11b, 11c comprises a static component 1110 and a non-static component 1120 as described in Fig.2. In a subsequent disabling step 103, the subscription profile 11a, 11b, 11c is disabled by the UICC 1. In a sending step 105, a profile-disabling command response is sent to the server 2, wherein this response includes the non-static component 1120 of the disabled subscription profile 11a, 11b, 11c.

The non-static component 1120 is structured according to an ANS.1 language script and is encoded according to DER-format. So, different kinds of data (files, applications, keys, etc.) can be structured in a data field of an SMS and send to the server 2 for storing.

After the sending step 105, a profile-deleting command from the server 2 is received in step 106. Subsequently, subscription profile is deleted in step 107 with deletion of the static component 1110 and the non-static component 1120 of the disabled subscription profile 11a, 11b, 11c. A confirmation is sent from the eUICC 1 in step 108 indicating that the profile 11a, 11b, 11c is deleted.

So, although deleted in the eUICC 1, the non-static component 1120 is sent to the server, e.g. to indicate the actual version of the profile 11a, 11b, 11c and to allow a restoring (re-establishing) of the entire profile with static and non-static components 1110, 1120 in the eUICC 1. So, a disabled profile does not necessarily be kept in the eUICC 1 which saves memory space in the eUICC 1 that can be used for other purposes.

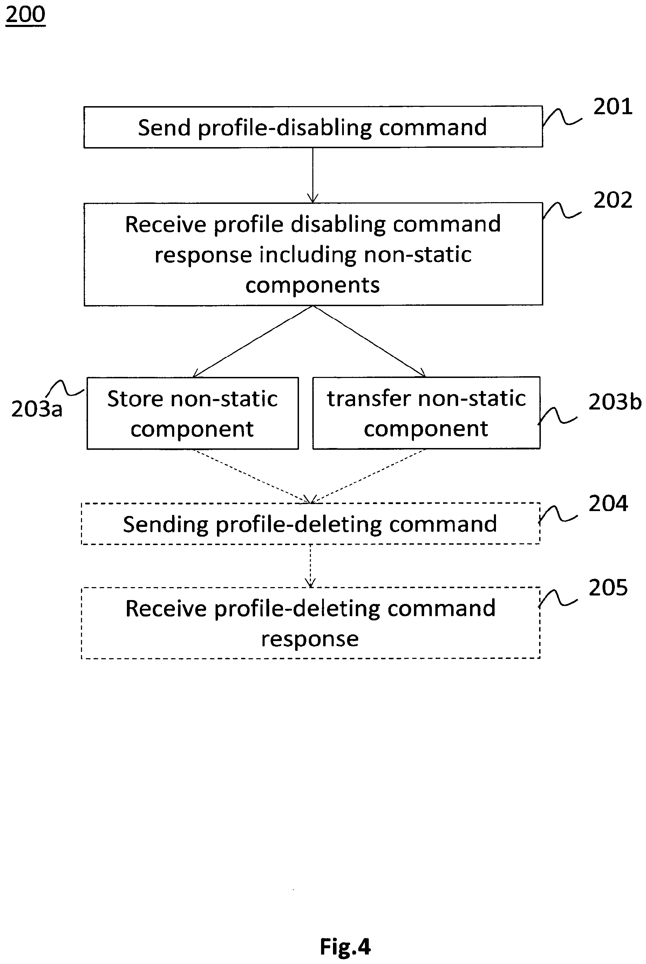

Fig.4 shows an exemplary embodiment of a process flow of a method 200 for managing a subscription profile in a subscription managing server 2 according to the invention. Process steps that are optional are drawn in dashed lines.

In step 201, a profile-disabling command from the server 2 for disabling an enabled subscription profile 11a, 11b, 11c to an UICC 1 is sent, wherein the subscription profile 11a, 11b, 11c comprises a static component 1110 and a non-static component 1120. In step 202, a profile-disabling command response from the UICC 1 is received, wherein this response includes the non-static component 1110 of the disabled subscription profile 11a, 11b, 11c.

Subsequently, in step 203a, the non-static component 1120 of the disabled subscription profile 11a, 11b, 11c at the server 2 is stored. Therefore, the server 2 comprises a storage for storing a plurality of non-static components 1120.

Alternatively, or additionally, in step 203b, the non-static component 1120 of the disabled subscription profile 11a, 11b, 11c is transferred to a mobile network operating server 3. So, the non-static component of subscription profiles is stored in the MNO server 3.

Optionally, in step 204, a profile-deleting command is sent to the UICC 1 upon successful storing the non-static component 1120 of the subscription profile 11a, 11b, 11c. Optionally, in step 205, a profile-deleting command response from the UICC is received.

Fig.5 shows an exemplary embodiment of a process flow for disabling and deleting a subscription profile according to the invention in a subscription managing system according to Fig.1. The Profile Disabling procedure is initiated by the MNO 3 owning the Profile to be disabled. The procedure illustrated uses SMS as a possible transport protocol between the SM-SR 2a and the eUICC 1 but can be also performed using other transport protocols.

It is assumed that the eUICC 1 identified updates of the profile to be disabled using an applet as described with step 101. This may be achieved by running a specific JC applet in the eUICC 1. So, the eUICC 1 is aware of the non-static component 1120 of the profile to be disabled.

In step 201, the MNO 3, the owner of the target profile 11a calls the function "ES4.DisableProfile" with its relevant input data, such as EID and ICCID. The SM 2 verifies that the MNO request is acceptable and checks that the profile is enabled and checks that the profile disabling is allowed according to policy rules. If any of the conditions to be verified are not satisfied, the SM 2 shall return a response indicating the failure, and the procedure shall end (not shown in Fig.5). The SM 2 (e.g. SM-SR 2a) sends a mobile terminated-SMS, MT-SMS, containing a "ES5.STORE DATA" command for profile disabling with its relevant input data to the eUICC 1, e.g. the ISD-R 12. The SM 2 requests a Proof of Receipt, PoR to get the execution status of the "ES5.STORE DATA" command.

Upon reception of the profile disabling command in step 102, the eUICC 1 may verify that the target profile is in an enabled state; that the policy rule of the currently enabled profile allows its disabling; and that the target Profile is not the Profile with Fall-back Attribute set. If any of these verifications fail, the command is terminated with an error status word (not shown in Fig.5). If all verifications are fulfilled, the target profile is disabled in step 103 and the Profile with the Fall-back Attribute set is enabled.

In step 104, the eUICC 1 non-static component of the target profile to be disabled is encoded in DER-format and structured as ASN.1 message. This ASN.1 message is included in a data field of a mobile originated SMS and send to the SM 2 in step 105. This MO-SMS containing the non-static component 1120 is received by the SM 2 in step 202. This MO-SMS containing also the execution status of the "ES5.STORE DATA" command to the SM 2.

Subsequently to step 105, a proactive command REFRESH (initiated by the ISD-R 12) is send to the terminal device 6 from the eUICC 1 during "UICC Reset" mode according to ETSI TS 102 223. The eUICC 1 shall issue the REFRESH command within a time interval of a plurality, e.g. ten STATUS events after receiving the disable command. The REFRESH will trigger the execution of a network attach procedure. In case of any error, the profile will be switched back to the enable-status (not shown in Fig.5). The eUICC 1 then may perform a notification procedure via SMS (not shown in Fig.5).

In step 203a, the SM 2 stores the non-static component of the profile derived from the data field of the MO-SMS, e.g. in a database or storage of the SM 2. Alternatively, or additionally, in step 203b, the non-static component of the profile is transferred to the MNO 3, e.g. via interface ES4.

In step 204, the SM 2 sends another MT-SMS containing a "ES5.DELETE" command with its relevant input data to the eUICC 1, e.g. the ISD-R 12 for deleting the previously disabled Profile. This MT-SMS is received in the eUICC 1 in step 106. The SM 2 requests a PoR to get the execution status of the "ES5.DELETE" command (not shown in Fig.5).

The ISD-R 12 of the eUICC 1 may enforce the policy rule of the target profile to identify whether the profile can be deleted. Upon reception of the DELETE command, the eUICC 1, e.g. the ISD-R 12 may verify that the policy rule of the target profile allows its deletion. This includes, that the target profile is not the profile with fallback Attribute set and that the target profile is not in the Enabled state. If the policy rule rejects the deletion of the target profile, the eUICC 1 may return a MO-SMS containing the response indicating the corresponding failure, and the disabling and deleting procedure ends (not shown in Fig.5)

If the ISD-R 12 allows its deletion, the ISD-R 12 deletes the targeted ISD-P 10 and the contained Profile in step 107 entirely. In step 108, the eUICC 1, e.g. the ISD-R 12 may return the MO-SMS to the SM 2 containing the execution status of the "ES5.DELETE" command.

Fig.6 shows an exemplary embodiment of a process flow for re-establishing a previously deleted subscription profile according to the invention in a subscription managing system according to Fig.1. In Fig.6 it should be noted that a previously deleted profile should be re-established in the eUICC 1 with the non-static component 1120 of that previously deleted profile.

In step 109, the eUICC 1 receives a download-profile command. Therefore, the MNO 3 owning the profile to download may call the "ES2.DownloadProfile" function with its relevant input data (EID, ICCID; MSISDN, profile type; SRID). By providing the required final state, the MNO 3 may ask the SM 2 to enable the newly downloaded Profile at the end of the procedure. Else, by default, the Profile will be in the DISABLED state. Not shown in Fig.5 is a eUICC eligibility check as it is irrelevant for this application.

If there is no existing HTTPS session with the eUICC 1, the SM 1 triggers a HTTPS session in step 109. Therefore, the SM 2 sends a MT-SMS to the ISD-R 12 for HTTPS session triggering and the ISD-R 12 checks the security of the MT-SMS. Then, an TLS socket is opened if supported and if correctly configured by SM 2 and eUICC 1, the ISD-R 12 requests a DNS resolution to retrieve the IP Address of the SM 2. A PSK-TLS handshake is performed. Still in step 109, the SM 2 returns a HTTP POST response containing a "ES5.CreateISDP" with its relevant input data.

In step 110, the eUICC 1, e.g. the ISD-R 12 create an ISD-P 10 and returns the "ES5.CreateISDP" function execution response within a POST request to the SM 2.

In step 111, the SM 3 calls the "ES3.SendData" function providing the static component 1110 of the profile data to download as input data to the UICC 1. The eUICC 1, e.g. the ISD-P 10 processes the security of the received data and received command TLV(s) and may confirm a PoR. The data received are all static component of the profile as explained in Fig.2.

Upon confirmation, the SM 2 restores the non-static component 1120 of the profile from its database or storage or requests the non-static components 1120 from the MNO 3. Subsequently, the non-static components of the profile ae send to the eUICC 1 and received there in step 112. A confirmation may be send from the eUICC 1 to the SM 2 in step 101a. Upon confirmation, the profile is completely downloaded and the step 101 may be operated. There, a JC applet in the eUICC 1 may be enabled to identify any further updates of the created and downloaded profile. It has to be noted that the step 101a can be used to trigger the JC applet even if the profile that is created is new and has not been previously disabled and deleted.

Since the download is completed and has been confirmed in step 101a, any update data or data added to the profile is now identified in step 101. The respective update data may be flagged, or a table may be used.

The confirmation in step 101a will be forwarded to the MNO 3 by the SM 2 as a response to the ES2.DownloadProfile function.

Following an enable profile procedure is described. Therefore, a Profile Enabling procedure between the MNO 3 and the SM 2 is used to enable a Profile previously downloaded and installed on an eUICC 1. The procedure is initiated by the MNO 3 owning the Profile to be enabled. The procedure illustrates the usage of SMS as a possible transport protocol between SM 2 and eUICC 1 but can also be performed using other transport protocols.

The MNO 3 of the target Profile calls the "ES4.EnableProfile" function with its relevant input data. Subsequently, the SM 2 sends an MT-SMS containing the "ES5.STORE DATA" command for profile enabling with its relevant input data (see above) to the eUICC 1, e.g. the ISD-R. (4) If the policy rules of ISD-R allow, the ISD-R 12 disables the currently enabled ISD-P 10 and enable the targeted ISD-P 10. The ISD-R 12 returns the MO-SMS containing the execution status of the "ES5.STORE DATA" command to the SM 2.

The eUICC 1, e.g. ISD-R 12 sends a REFRESH proactive command in "UICC reset mode" to the terminal device 6. This will trigger the execution of a network attach procedure. If successful, this can also be used to trigger the identification of updates provided to this enabled profile as step 101.

The system of Fig.1 has the server 2 (SM-SR 2a and SM-DP 2b) and a UICC 1 being incorporated in a terminal device 6. A JC-based applet may be used to identify updates in a profile. The applet is triggered (enabled) according to steps 101a or 101b in Fig.6 - which is independent on whether a completely new profile is created, or a previously deleted profile is re-established.

The applet can identify incoming updates to all profiles and may so mark non-static components in different profiles included in the eUICC.

The eUICC 1 comprises a basic OS that has basic functionality to the apple and can establish and participate in a communication via communication links ES5 and ES8 to the server 2. The communication links ES5 and ES8 are logical communication link, meaning that a physical path of this communication links is directed via the device terminal 6. The server 2 or the MNO 3 have at least a storage for storing a plurality of non-static components.

All features of all embodiments described, shown and/or claimed herein can be combined with each.

While various embodiments of the present invention have been described above, they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a feature of the invention may have been disclosed with respect to only one of several implementations, such feature may be combined with one or more other features of the other implementations as may be desired and advantageous for any given or application.

### LIST OF REFERENCE SIGNS

- 1: eUICC
10 Profile Issuer Security Domain, ISD-P
11a-c Subscription Profiles,
1110 Static component
1120 Non-Static component
12 Root Issuer Security Domain, ISD-R
- 2: Subscription Managing Server
2a Subscription Manager Secure Routing, SM-SR
2b Subscription Manager Data Preparation, SM-DP
- 3: Mobile Network Operator
- 4: Certificate Issuer, CI
- 5: eUICC Manufacturer, EUM
- 6: Terminal Device
- 101-112: Method steps in UICC
- 201-205: Method steps in subscription managing server
- ES1-ES8: Interfaces

## Claims

1. A method (100) for managing subscription profiles in a Universal Integrated Chip Card, UICC (1), the method (100) being performed in the UICC (1) and comprising the steps of:
- Receiving (102) a profile-disabling command from a server (2) for disabling an enabled subscription profile (11a, 11b, 11c) in the UICC (1), wherein the subscription profile (11a, 11b, 11c) comprises a static component (1110) and a non-static component (1120), wherein each change in the static profile component during an enable state of the subscription profile is referenced as non-static component;
- Disabling (103) the subscription profile (11a, 11b, 11c) by the UICC (1);
- Sending (105) a profile-disabling command response to the server (2), wherein this response includes the non-static component (1120) of the disabled subscription profile (11a, 11b, 11c).

2. The method (100) of claim 1, wherein after the step of sending (105) the profile-disabling command response to the server (2), the method further comprises:
- Receiving (106) a profile-deleting command from the server;
- Deleting (107) the disabled subscription profile with deletion of the static component (1110) and the non-static component (1120) of the disabled subscription profile (11a, 11b, 11c).

3. The method (100) of claim 1 or 2, wherein the non-static component (1120) of the subscription profile comprises (11a, 11b, 11c) at least one of the following:
- at least one subscription profile application update;
- at least one subscription profile file update;
- at least one network access application update;
- at least one over-the-air update; and/or
- at least one secure domain data update.

4. The method (100) of one of the preceding claims, wherein before the step of sending (105) the profile-disabling command response to the server (2), the method (100) further comprising the steps of:
- Structuring (104) the non-static component of the disabled subscription profile (11a, 11b, 11c) in an Abstract Syntax Notation One, ANS.1, language by encoding it in a Distinguished Encoding Rules, DER, format; and
- including the DER formatted non-static component (1120) in a data field of a short message service, SMS.

5. The method (100) of one of the proceeding claims, wherein the non-static component (1120) of the subscription profile (11a, 11b, 11c) is embedded in a data field of a mobile originated short message service, MO-SMS.

6. The method (100) of one of the proceeding claims, wherein non-static components (1110) of the subscription profiles (11a, 11b, 11c) included in the UICC (1) are identified by an applet.

7. The method (100) of claim 6, wherein the applet is enabled after confirmation (101a) of a profile-download procedure completion indicated by the UICC (1).

8. The method (100) of claim 6, wherein the applet is enabled after enabling (101b) of a subscription profile (11a, 11b, 11c) in a profile-enabling procedure indicated by the UICC (1).

9. The method (100) of one of the claims 6 to 8, wherein the identifying (101) is executed upon receipt of update-data for updating subscription profiles (11a, 11b, 11c).

10. The method (100) of one of the claims 2 to 9 having the further steps of
- Receiving (109) a profile-creating command from the server (2) for creating the static component of the previously deleted subscription profile (11a, 11b, 11c) in the UICC (1);
- Creating (110) a new subscription profile (11a, 11b, 11c) in the UICC (1);
- Receiving (111) the static component (1110) of the previously deleted subscription profile (11a, 11b, 11c) during a profile-downloading procedure;
- Receiving (112) the non-static component (1120) of the previously deleted subscription profile (11a, 11b, 11c) in the newly created subscription profile upon download complete response from the UICC (1).

11. A method (200) for managing subscription profiles in subscription managing server (2), the method (200) being performed by the server (2) and comprising the steps of:
- Sending (201) a profile-disabling command from the server (2) for disabling an enabled subscription profile (11a, 11b, 11c) to an UICC (1), wherein the subscription profile (11a, 11b, 11c) comprises a static component (1110) and a non-static component (1120),
wherein each change in the static profile component during an enable state of the subscription profile is referenced as non-static component;
- Receiving (202) a profile-disabling command response from the UICC (1), wherein this response includes the non-static component (1110) of the disabled subscription profile (11a, 11b, 11c); and
- Storing (203a) the non-static component (1120) of the disabled subscription profile (11a, 11b, 11c) at the server (2) and/or transferring (203b) the non-static component (1120) of the disabled subscription profile (11a, 11b, 11c) to a mobile network operating server (3).

12. The method (200) of claim 11, wherein the non-static component (1120) of the subscription profile (11a, 11b, 11c) is embedded in a data field of a mobile-originated short message service, MO-SMS; and wherein after the storing step (203a) or the transferring step (203b), the method (200) comprises the following steps of:
- Sending (204) a profile-deleting command to the UICC (1) upon successful storing the non-static component (1120) of the subscription profile (11a, 11b, 11c); and
- Receiving (205) a profile-deleting command response from the UICC (1).

13. A subscription managing server (2) comprising:
- a storage for storing a plurality of non-static components of subscription profiles;
- an interface (ES5, ES8) for communicating to an UICC (1) via a terminal device (6); and
- an interface (ES2, ES4) for communicating to a mobile network operating server (3),
- wherein the subscription managing server (2) being configured to execute the method steps (201 to 205) of one of the claims 11 or 12.

14. An embedded Universal Integrated Chip Card (1), eUICC, operably incorporable in a terminal device (6), the UICC comprising:
- a storage for storing subscription profiles (11a, 11b, 11c), wherein each subscription profile (11a, 11b, 11c) comprises a static component (1110) and a non-static component (1120);
- an interface (ES5, ES8) for communicating to a subscription managing server (2),
- wherein the eUICC (1) being configured to execute the method steps (101 to 112) of one of the claims 1 to 9.

15. A computer-program-product executably installed in a Universal Integrated Chip Card (1), UICC, and when executed by the UICC, causing the UICC to perform the method steps (101 to 112) of one of the preceding claims 1 to 10.

## Patentansprüche

1. Ein Verfahren (100) zum Verwalten von Abonnementprofilen in einer Universal Integrated Chip Card, UICC (1), wobei das Verfahren (100) in der UICC (1) durchgeführt wird und die folgenden Schritte umfasst:
- Empfangen (102) eines Profildeaktivierungsbefehls von einem Server (2) zum Deaktivieren eines aktivierten Abonnementprofils (11a, 11b, 11c) in der UICC (1), wobei das Abonnementprofil (11a, 11b, 11c) eine statische Komponente (1110) und eine nichtstatische Komponente (1120) umfasst, wobei jede Änderung der statischen Profilkomponente während eines aktiven Zustands des Abonnementprofils als nichtstatische Komponente referenziert wird;
- Deaktivieren (103) des Abonnementprofils (11a, 11b, 11c) durch die UICC (1);
- Senden (105) einer Befehlsantwort zum Deaktivieren des Profils an den Server (2), wobei diese Antwort die nicht-statische Komponente (1120) des deaktivierten Abonnementprofils (11a, 11b, 11c) enthält.

2. Das Verfahren (100) nach Anspruch 1, wobei nach dem Schritt des Sendens (105) der Befehlsantwort zum Deaktivieren des Profils an den Server (2) das Verfahren ferner umfasst:
- Empfangen (106) eines Profil-Lösch-Befehls von dem Server;
- Löschen (107) des deaktivierten Abonnementprofils mit Löschen der statischen Komponente (1110) und der nicht-statischen Komponente (1120) des deaktivierten Abonnementprofils (11a, 11b, 11c).

3. Das Verfahren (100) nach Anspruch 1 oder 2, wobei die nichtstatische Komponente (1120) des Abonnementprofils (11a, 11b, 11c) mindestens eines der folgenden umfasst:
- mindestens eine Aktualisierung einer Abonnementprofil-Anwendung;
- mindestens eine Aktualisierung einer Abonnementprofil-Datei;
- mindestens eine Aktualisierung einer Netzwerkzugangs-Anwendung;
- mindestens eine Over-the-Air-Aktualisierung; und/oder
- mindestens eine Aktualisierung eines sicheren Bereichs.

4. Das Verfahren (100) nach einem der vorhergehenden Ansprüche, wobei das Verfahren (100) vor dem Schritt des Sendens (105) der Profil-Deaktivierungs-Befehlsantwort an den Server (2) ferner die folgenden Schritte umfasst:
- Strukturierung (104) der nichtstatischen Komponente des deaktivierten Abonnementprofils (11a, 11b, 11c) in einer Abstract Syntax Notation One, ANS. 1, Sprache durch deren Kodierung in ein Distinguished Encoding Rules, DER, Format; und
- Einfügen der DER-formatierten nicht-statischen Komponente (1120) in ein Datenfeld eines Kurznachrichtendienstes, SMS.

5. Das Verfahren (100) nach einem der vorhergehenden Ansprüche, wobei die nichtstatische Komponente (1120) des Abonnementprofils (11a, 11b, 11c) in ein Datenfeld eines von einem Mobiltelefon ausgehenden Kurznachrichtendiensts, MO-SMS, eingebettet ist.

6. Das Verfahren (100) nach einem der vorhergehenden Ansprüche, wobei nichtstatische Komponenten (1110) der in der UICC (1) enthaltenen Abonnementprofile (11a, 11b, 11c) durch ein Applet identifiziert werden.

7. Das Verfahren (100) nach Anspruch 6, wobei das Applet nach der Bestätigung (101a) eines von der UICC (1) angezeigten Abschlusses eines Profil-Herunterladen-Vorgangs aktiviert wird.

8. Das Verfahren (100) nach Anspruch 6, wobei das Applet nach der Freigabe (101b) eines Abonnementprofils (11a, 11b, 11c) in einem von der UICC (1) angezeigten Profilfreigabeverfahren freigegeben wird.

9. Das Verfahren (100) nach einem der Ansprüche 6 bis 8, wobei die Identifizierung (101) bei Empfang von Aktualisierungsdaten zur Aktualisierung von Abonnementprofilen (11a, 11b, 11c) ausgeführt wird.

10. Das Verfahren (100) nach einem der Ansprüche 2 bis 9 mit den weiteren Schritten
- Empfangen (109) eines Profilerstellungsbefehls von dem Server (2) zum Erstellen der statischen Komponente des zuvor gelöschten Abonnementprofils (11a, 11b, 11c) in der UICC (1);
- Erstellen (110) eines neuen Abonnementprofils (11a, 11b, 11c) in der UICC (1);
- Empfangen (111) der statischen Komponente (1110) des zuvor gelöschten Abonnementprofils (11a, 11b, 11c) während eines Profil-Herunterladenvorgangs;
- Empfangen (112) der nichtstatischen Komponente (1120) des zuvor gelöschten Abonnementprofils (11a, 11b, 11c) in dem neu erstellten Abonnementprofil bei Vollständig-Heruntergeladen-Antwort von der UICC (1).

11. Das Verfahren (200) zum Verwalten von Abonnementprofilen in einem Abonnementverwaltungsserver (2), wobei das Verfahren (200) von dem Server (2) durchgeführt wird und die folgenden Schritte umfasst:
- Senden (201) eines Profildeaktivierungsbefehls vom Server (2) zum Deaktivieren eines aktivierten Abonnementprofils (11a, 11b, 11c) an eine UICC (1), wobei das Abonnementprofil (11a, 11b, 11c) eine statische Komponente (1110) und eine nichtstatische Komponente (1120) umfasst, wobei jede Änderung der statischen Profilkomponente während eines aktiven Zustands des Abonnementprofils als nichtstatische Komponente referenziert wird;
- Empfangen (202) einer Befehlsantwort zum Deaktivieren des Profils von der UICC (1), wobei diese Antwort die nichtstatische Komponente (1110) des deaktivierten Abonnementprofils (11a, 11b, 11c) enthält; und
- Speichern (203a) der nichtstatischen Komponente (1120) des deaktivierten Abonnementprofils (11a, 11b, 11c) auf dem Server (2) und/oder Übertragen (203b) der nichtstatischen Komponente (1120) des deaktivierten Abonnementprofils (11a, 11b, 11c) an einen Mobilnetzwerkbetreiberserver (3).

12. Das Verfahren (200) nach Anspruch 11, wobei die nichtstatische Komponente (1120) des Abonnementprofils (11a, 11b, 11c) in ein Datenfeld eines von einem Mobiltelefon ausgehenden Kurznachrichtendienstes, MO-SMS, eingebettet ist; und wobei das Verfahren (200) nach dem Schritt des Speicherns (203a) oder dem Schritt des Übertragens (203b) die folgenden Schritte umfasst:
- Senden (204) eines Profil-Lösch-Befehls an die UICC (1) nach erfolgreicher Speicherung der nichtstatischen Komponente (1120) des Abonnementprofils (11a, 11b, 11c); und
- Empfangen (205) einer Profil-Lösch-Befehls-Antwort von der UICC (1).

13. Ein Abonnementverwaltungsserver (2), der Folgendes umfasst:
- einen Speicher zum Speichern einer Vielzahl von nichtstatischen Komponenten von Abonnementprofilen;
- eine Schnittstelle (ES5, ES8) zur Kommunikation mit einer UICC (1) über ein Endgerät (6); und
- eine Schnittstelle (ES2, ES4) zur Kommunikation mit einem Mobilfunk-Betreiberserver (3),
- wobei der Abonnementverwaltungsserver (2) konfiguriert ist, um die Verfahrensschritte (201 bis 205) eines der Ansprüche 11 oder 12 auszuführen.

14. Eine eingebettete Universal Integrated Chip Card (1), eUICC, die funktionsfähig in ein Endgerät (6) eingebaut werden kann, wobei die UICC umfasst:
- einen Speicher zum Speichern von Abonnementprofilen (11a, 11b, 11c), wobei jedes Abonnementprofil (11a, 11b, 11c) eine statische Komponente (1110) und eine nichtstatische Komponente (1120) umfasst;
- eine Schnittstelle (ES5, ES8) zur Kommunikation mit einem Abonnementverwaltungsserver (2),
- wobei die eUICC (1) zur Ausführung der Verfahrensschritte (101 bis 112) eines der Ansprüche 1 bis 9 konfiguriert ist.

15. Ein Computerprogrammprodukt, das in einer Universal Integrated Chip Card (1), UICC, ausführbar installiert ist und, wenn es von der UICC ausgeführt wird, die UICC veranlasst, die Verfahrensschritte (101 bis 112) eines der vorhergehenden Ansprüche 1 bis 10 durchzuführen.

## Revendications

1. Procédé (100) pour gérer des profils d'abonnement dans une carte à puce intégrée universelle, UICC (1), le procédé (100) étant mis en œuvre dans l'UICC (1) et comportant les étapes consistant à :
- recevoir (102) une instruction de désactivation de profil provenant d'un serveur (2) pour désactiver un profil d'abonnement activé (11a, 11b, 11c) dans l'UICC (1), dans lequel le profil d'abonnement (11a, 11b, 11c) comporte un composant statique (1110) et un composant non statique (1120), dans lequel chaque changement dans le composant de profil statique pendant un état actif du profil d'abonnement est référencé comme un composant non statique ;
- désactiver (103) le profil d'abonnement (11a, 11b, 11c) par l'UICC (1) ;
- envoyer (105) une réponse à l'instruction de désactivation de profil au serveur (2), dans lequel cette réponse inclut le composant non statique (1120) du profil d'abonnement désactivé (11a, 11b, 11c).

2. Procédé (100) selon la revendication 1, dans lequel après l'étape d'envoi (105) de la réponse à l'instruction de désactivation de profil au serveur (2), le procédé comporte en outre les étapes consistant à :
- recevoir (106) une instruction de suppression de profil provenant du serveur ;
- supprimer (107) le profil d'abonnement désactivé avec suppression du composant statique (1110) et du composant non statique (1120) du profil d'abonnement désactivé (11a, 11b, 11c).

3. Procédé (100) selon la revendication 1 ou 2, dans lequel le composant non statique (1120) du profil d'abonnement (11a, 11b, 11c) comporte au moins l'un des éléments suivants :
- au moins une mise à jour d'application de profil d'abonnement ;
- au moins une mise à jour de fichier de profil d'abonnement ;
- au moins une mise à jour d'application d'accès à un réseau ;
- au moins une mise à jour par voie hertzienne ; et/ou
- au moins une mise à jour de données de domaine sécurisé.

4. Procédé (100) selon l'une des revendications précédentes, dans lequel avant l'étape d'envoi (105) de la réponse à l'instruction de désactivation de profil au serveur (2), le procédé (100) comporte en outre les étapes consistant à :
- structurer (104) le composant non statique du profil d'abonnement désactivé (11a, 11b, 11c) dans un langage ANS.1 (Abstract Syntax Notation One), en le codant dans un format de règles de codage distinctif, DER ; et
- inclure le composant non statique au format DER (1120) dans un champ de données d'un service de minimessages, SMS.

5. Procédé (100) selon l'une des revendications précédentes, dans lequel le composant non statique (1120) du profil d'abonnement (11a, 11b, 11c) est intégré dans un champ de données d'un service de minimessages provenant d'un mobile, MO-SMS.

6. Procédé (100) selon l'une des revendications précédentes, dans lequel les composants non statiques (1110) des profils d'abonnement (11a, 11b, 11c) inclus dans l'UICC (1) sont identifiés par une applet.

7. Procédé (100) selon la revendication 6, dans lequel l'applet est activée après la confirmation (101a) d'une fin de procédure de téléchargement de profil indiquée par l'UICC (1).

8. Procédé (100) selon la revendication 6, dans lequel l'applet est activée après l'activation (101a) d'un profil d'abonnement (11a, 11b, 11c) dans une procédure d'activation de profil indiquée par l'UICC (1).

9. Procédé (100) selon l'une des revendications 6 à 8, dans lequel l'identification (101) est exécutée à réception de données de mise à jour pour mettre à jour des profils d'abonnement (11a, 11b, 11c).

10. Procédé (100) selon l'une des revendications 2 à 9 ayant les étapes supplémentaires consistant à :
- recevoir (109) une instruction de création de profil provenant du serveur (2) pour créer le composant statique du profil d'abonnement (11a, 11b, 11c) précédemment supprimé dans l'UICC (1) ;
- créer (110) un nouveau profil d'abonnement (11a, 11b, 11c) dans l'UICC (1) ;
- recevoir (111) le composant statique (1110) du profil d'abonnement (11a, 11b, 11c) précédemment supprimé pendant une procédure de téléchargement de profil ;
- recevoir (112) le composant non statique (1120) du profil d'abonnement (11a, 11b, 11c) précédemment supprimé dans le profil d'abonnement récemment créé lors d'une réponse de fin de téléchargement provenant de l'UICC (1).

11. Procédé (200) pour gérer des profils d'abonnement dans un serveur de gestion d'abonnements (2), le procédé (200) étant mis en œuvre par le serveur (2) et comportant les étapes consistant à :
- envoyer (201) à l'UICC (1) une instruction de désactivation de profil provenant du serveur (2) pour désactiver un profil d'abonnement activé (11a, 11b, 11c), dans lequel le profil d'abonnement (11a, 11b, 11c) comporte un composant statique (1110) et un composant non statique (1120), dans lequel chaque changement dans le composant de profil statique pendant un état actif du profil d'abonnement est référencé comme un composant non statique ;
- recevoir (202) une réponse à l'instruction de désactivation de profil provenant de l'UICC (1), dans lequel cette réponse inclut le composant non statique (1110) du profil d'abonnement désactivé (11a, 11b, 11c) ; et
- stocker (203a) le composant non statique (1120) du profil d'abonnement désactivé (11a, 11b, 11c) sur le serveur (2) et/ou transférer (203b) le composant non statique (1120) du profil d'abonnement désactivé (11a, 11b, 11c) vers un serveur d'exploitation de réseau mobile (3).

12. Procédé (200) selon la revendication 11, dans lequel le composant non statique (1120) du profil d'abonnement (11a, 11b, 11c) est intégré dans un champ de données d'un service de minimessages provenant d'un mobile, MO-SMS ; et dans lequel après l'étape de stockage (203a) ou l'étape de transfert (203b), le procédé (200) comporte les étapes suivantes consistant à :
- envoyer (204) une instruction de suppression de profil à l'UICC (1) lors d'un stockage réussi du composant non statique (1120) du profil d'abonnement (11a, 11b, 11c) ; et
- recevoir (205) une réponse à l'instruction de suppression de profil provenant de l'UICC(1).

13. Serveur de gestion d'abonnements (2) comportant :
- un dispositif de stockage pour stocker une pluralité de composants non statiques de profils d'abonnement ;
- une interface (ES5, ES8) pour communiquer avec une UICC (1) via un dispositif terminal (6) ; et
- une interface (ES2, ES4) pour communiquer avec un serveur d'exploitation de réseau mobile (3),
- dans lequel le serveur de gestion d'abonnements (2) est configuré pour exécuter les étapes de procédé (201 à 205) selon l'une des revendications 11 ou 12.

14. Carte à puce intégrée universelle incorporée (1), eUICC, incorporable de manière opérationnelle dans un dispositif terminal (6), l'UICC comportant :
- un dispositif de stockage pour stocker des profils d'abonnement (11a, 11b, 11c), dans laquelle chaque profil d'abonnement (11a, 11b, 11c) comporte un composant statique (1110) et un composant non statique (1120) ;
- une interface (ES5, ES8) pour communiquer avec un serveur de gestion d'abonnements (2),
- dans laquelle l'eUICC (1) est configurée pour exécuter les étapes de procédé (101 à 112) selon l'une des revendications 1 à 9.

15. Produit de programme informatique installé de manière exécutable dans une carte à puce intégrée universelle (1), UICC, et lorsqu'il est exécuté par l'UICC, amenant l'UICC à exécuter les étapes de procédé (101 à 112) selon l'une des revendications 1 à 10 précédentes.
